# EUROPEAN PATENT SPECIFICATION

(11) **EP 4 118 716 B1**
(45) Date of publication and mention of the grant of the patent: **31.12.2025**
(21) Application number: 21767932.3
(22) Date of filing: 08.03.2021
(51) Int. Cl.: H04L 12/12

(54) **SMALL FORM FACTOR SYNCHRONOUS TO ETHERNET COMMUNICATION CONVERTER PLUG**
STECKER FÜR EINEN SYNCHRON-ETHERNET-KOMMUNIKATIONSWANDLER MIT KLEINEM FORMFAKTOR
FICHE DE CONVERTISSEUR DE COMMUNICATION SYNCHRONE À ETHERNET, À FAIBLE FACTEUR DE FORME

(30) Priority: 09.03.2020 US 202062986800 P
(43) Date of publication of application: 18.01.2023
(73) Proprietor: Ceragon Networks LTD., 4810002 Rosh HaAyin (IL)
(72) Inventor: BERCOVICH, Dudu, 4442157 Kfar-Saba (IL); LEVY, Naftali, 4533655 Hod-HaSharon (IL); BENOLIEL, Ilan, 4220108 Netanya (IL); RAJPURKAR, Haim, 4841068 Rosh HaAyin (IL)
(74) Representative: Tiburzi, Andrea
(86) International application number: PCT/IL2021/050251
(87) International publication number: WO 2021/181380

(56) References cited:
- WO-A1-2019/217978
- US-A1- 2009 238 204
- US-A1- 2009 257 754
- US-A1- 2013 100 948
- US-A1- 2014 185 601
- US-A1- 2015 186 325
- US-A1- 2016 342 563
- US-A1- 2018 035 319
- US-A1- 2019 158 430
- US-A1- 2020 036 793
- US-B1- 7 149 692

## Description

### FIELD AND BACKGROUND OF THE INVENTION

The present disclosure, in some embodiments thereof, relates to a converter plug and, more particularly but not exclusively, to a converter plug for converting one or more synchronous communication signals to one or more Ethernet communication signals and/or vice versa, and/or more particularly but not exclusively, to a converter plug for converting one or more synchronous communication signals to one or more asynchronous communication signals and/or vice versa.

Additional background art includes:
A specification of a SFP (Small Form-factor Pluggable) interface - SFP: INF-8074; and
A specification of a QSFP (Quad Small Form-factor Pluggable) interface - QSFP: SFF-8436.

US20190158430A1 to Forrest Lawrence Pierson published 6 June 2020 discloses a data switch for a packet data switch which includes switching nodes connected to each other in an interconnecting matrix, and providing a multiplicity of data paths between an incoming data or telecom port and an outgoing data or telecom port of the data switch. The interconnecting switching nodes can achieve high capacity data switching by providing a partial switching solution at each node, distributing the switching load. A switching protocol for interconnecting switching nodes allows data packets to be selectively passed from any incoming port on an interconnecting switch node to any interconnecting switching node or outgoing port connected to it. In an example, the switching protocol has mechanisms in it to provide for the duplicating of the contents of the data packet and pass them to multiple interconnecting switching nodes or outgoing ports.

### SUMMARY OF THE INVENTION

The present disclosure, in some embodiments thereof, relates to a converter plug and, more particularly but not exclusively, to a converter plug for converting one or more synchronous communication signals to one or more Ethernet communication signals and/or vice versa, and/or more particularly but not exclusively, to a converter plug for converting one or more synchronous communication signals to one or more asynchronous communication signals and/or vice versa.

According to an aspect of some embodiments of the present disclosure there is provided a plug and a method of connecting for communication signal conversion according ot the appended claims.

Unless otherwise defined, all technical and/or scientific terms used herein have the same meaning as commonly understood by one of ordinary skill in the art to which the disclosure pertains. Although methods and materials similar or equivalent to those described herein can be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

As will be appreciated by one skilled in the art, some embodiments of the present disclosure may be embodied as a system, method or computer program product. Accordingly, some embodiments of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, some embodiments of the present disclosure may take the form of a computer program product embodied in one or more computer readable medium(s) having computer readable program code embodied thereon. Implementation of the method and/or system of some embodiments of the disclosure can involve performing and/or completing selected tasks manually, automatically, or a combination thereof. Moreover, according to actual instrumentation and equipment of some embodiments of the method and/or system of the disclosure, several selected tasks could be implemented by hardware, by software or by firmware and/or by a combination thereof, e.g., using an operating system.

For example, hardware for performing selected tasks according to some embodiments of the disclosure could be implemented as a chip or a circuit. As software, selected tasks according to some embodiments of the disclosure could be implemented as a plurality of software instructions being executed by a computer using any suitable operating system. In an exemplary embodiment of the disclosure, one or more tasks according to some exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

Any combination of one or more computer readable medium(s) may be utilized for some embodiments of the disclosure. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium and/or data used thereby may be transmitted using any appropriate medium, including but not limited to wireless, wireline, optical fiber cable, RF, etc., or any suitable combination of the foregoing.

Computer program code for carrying out operations for some embodiments of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Some embodiments of the present disclosure may be described below with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Some of the methods described herein are generally designed only for use by a computer, and may not be feasible or practical for performing purely manually, by a human expert.

### BRIEF DESCRIPTION OF THE SEVERAL VIEWS OF THE DRAWINGS

Some embodiments of the disclosure are herein described, by way of example only, with reference to the accompanying drawings. With specific reference now to the drawings in detail, it is stressed that the particulars shown are by way of example and for purposes of illustrative discussion of embodiments of the disclosure. In this regard, the description taken with the drawings makes apparent to those skilled in the art how embodiments of the disclosure may be practiced.

In the drawings:
FIGs. 1A and 1B are simplified illustrations of an example Ethernet radio;
FIG. 2A is a simplified block diagram illustration of a pluggable device according to an example embodiment of the disclosure;
FIG. 2B is a simplified block diagram illustration of a converter plug according to an example embodiment of the disclosure;
FIG. 3A is a simplified illustration of a converter plug according to an example embodiment of the disclosure;
FIGs. 3B and 3C are simplified illustrations of a converter plug according to an example embodiment of the disclosure;
FIG. 3D is a simplified illustration of a converter plug according to an example embodiment of the disclosure;
FIG. 3E is a simplified illustration of a converter plug according to an example embodiment of the disclosure;
FIG. 4A is a simplified illustration of QSFP card edge electric pads according to the QSFP prior art standard;
FIG. 4B is a simplified illustration of card edge connections and some electric components for connecting to QSFP card edge electric pads according to an example embodiment of the disclosure;
FIG. 5 is a simplified illustration of card edge electric pads according to the SFP prior art standard;
FIG. 6 is a simplified block diagram illustration of a converter plug according to an example embodiment of the disclosure; and
FIG. 7, which is a simplified flow chart illustration of a method for connecting a synchronous communication signal system to an asynchronous signal system according to an example embodiment of the disclosure.

### DESCRIPTION OF SPECIFIC EMBODIMENTS OF THE INVENTION

The present disclosure, in some embodiments thereof, relates to a converter plug and, more particularly but not exclusively, to a converter plug for converting one or more synchronous communication signals to one or more Ethernet communication signals and/or vice versa, and/or more particularly but not exclusively, to a converter plug for converting one or more synchronous communication signals to one or more asynchronous communication signals and/or vice versa.

### Introduction:

A typical existing communication module housing may not include a conversion unit for converting synchronous communication signals to Ethernet communication signals. However, if such a communication module had such conversion capabilities, the communication module could be used both for synchronous communications and for Ethernet communications, whether asynchronous Ethernet or synchronous Ethernet, without buying another communication module which *does* have such conversion capabilities. In some embodiments, existing equipment may be retro-fitted for receiving signals (synchronous or asynchronous) which the equipment was previously not capable of receiving.

The present disclosure describes using a compact converter which:
optionally fits into industry-standard sockets such as are found in synchronous and/or asynchronous communication module housings;
is optionally light enough to be plugged into such industry-standard sockets and stay plugged without falling off by its own weight;
optionally fits into a SFP (Small Form-factor Pluggable) or SFP+ plug;
optionally fits into a QSFP (Quad Small Form-factor Pluggable) or QSFP+ plug;
is optionally small enough to be plugged into such industry-standard plug;
optionally accepts power for performing synchronous to asynchronous signal conversion from either an asynchronous communication module housing or a synchronous communication module housing or both. The power may optionally be received through connections in the industry-standard sockets, or as a specific connection in addition to the connections in the industry-standard sockets;
optionally accepts control signals for performing synchronous to asynchronous signal conversion from either an asynchronous communication module housing or a synchronous communication module housing or both. The control signals may optionally be received through connections in the industry-standard sockets, or as a specific connection in addition to the connections in the industry-standard sockets; and
optionally accepts firmware updates for performing synchronous to asynchronous signal conversion from either an asynchronous communication module housing or a synchronous communication module housing or both. The firmware updates may optionally be received through connections in the industry-standard sockets, or as a specific connection in addition to the connections in the industry-standard sockets.

In some embodiments, such a compact pluggable converter does not have its own power cord for providing electric power to the converter.

In some embodiments, the compact pluggable converter is designed to accept power through a power wire in the industry standard plug.

In some embodiments, the compact pluggable converter is designed to accept power through a power wire added onto the industry standard plug. For example, in some embodiments the compact pluggable converter uses one SFP interface built into a Quad SFP plug to interface with signals, and one or more wires in a second SFP interface in the QSFP plug to provide power and/or a ground wire.

In some embodiments, the compact pluggable converter is designed to pass through power through the pluggable converter, from a first connector at a first input/output of the pluggable converter to a second connector at a second input/output of the pluggable converter.

In some embodiments, the compact pluggable converter uses one SFP interface built into a Quad SFP plug to interface with signals, and wires in a second SFP interface in the QSFP plug to provide a firmware update.

Ethernet is commonly used in many networks and in many types of communication and telecommunication equipment. Synchronous signals like CPRI (Common Public Radio Interface) and TDM (Time Division Multiplexing) cannot interface directly to Ethernet ports. A converter is required. Some equipment includes a converter built in the equipment electronics, and some does not. However, most types of telecom and networking equipment have an SFP/SFP+ (Small Form-factor Pluggable) interface or QSFP/QSFP+ (Quad Small Form-factor Pluggable) interface for Ethernet connectivity. SFP is commonly used for 1G/10Gbps Ethernet, and QSFP is commonly used for Quad interfaces of 10Gbps.

In various embodiments the disclosure relates to any type of SFP or QSFP. For example: QSFP, QSFP+ QSFP14, QSFP28, QSFP56; SFP, SFP+, SFP28, cSFP SFP-DD.

An aspect of some embodiments of the disclosure relates to implementing a Synchronous to Ethernet pluggable converter module using QSFP / SFP form factor plugs and/or sockets, enabling conversion of a synchronous interface to an Ethernet interface.

In some embodiments, the converter enables simple connectivity of synchronous signals, such as, by way of a non-limiting example, CPRI signals, to Ethernet, in a small form factor which can be used in QSFP or SFP receptacles.

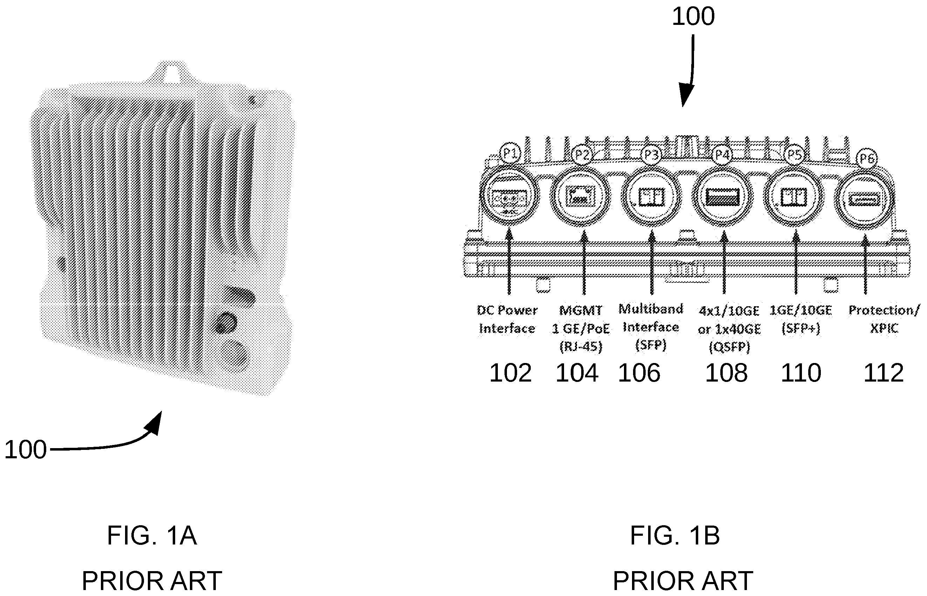

For purposes of better understanding some embodiments of the present disclosure, reference is first made to the construction and operation of an example high capacity packet radio as illustrated in Figures 1A and 1B.

FIG. 1A shows an external view of a high capacity packet radio 100, that is capable of transmitting a capacity of 10Gbps over Eband frequencies (71GHz - 76GHz, 81GHz - 86GHz).

However, the high capacity packet radio is not constructed to interface with a CPRI interface.

FIG. 1B shows various example sockets 102 104 106 108 110 112 built into the high capacity packet radio 100. The example sockets include sockets for: a DC power interface 102; an RJ-45 interface 104; an SFP multiband interface 106; a QSFP interface 108; and SFP+ interface 110; and a protection XPIC interface 112.

In some embodiments, a converter plug as described herein potentially enables the high capacity packet radio 100 to interface with a CPRI interface.

Before explaining at least one embodiment of the disclosure in detail, it is to be understood that the disclosure is not necessarily limited in its application to the details of construction and the arrangement of the components and/or methods set forth in the following description and/or illustrated in the drawings and/or the Examples. The disclosure is capable of other embodiments or of being practiced or carried out in various ways.

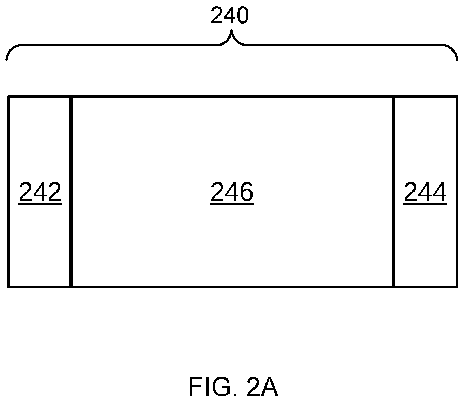

Reference is now made to FIG. 2A, which is a simplified block diagram illustration of a pluggable device 240 according to an example embodiment of the disclosure.

The pluggable device 240 includes:
an industry standard connector plug 242 for a synchronous signal;
an industry standard connector plug 244 for an Ethernet signal;
a synchronous-to-asynchronous signal converter module 246.

In some embodiments, the pluggable device 240 is sized and shaped for plugging into an industry standard connector receptacle for communications signals.

In some embodiments, the signal converter module 246 is optionally a synchronous to asynchronous Ethernet signal converter module 246.

In some embodiments, the signal converter module 246 is optionally a synchronous to synchronous Ethernet signal converter module 246, and thus not a synchronous-to-asynchronous signal converter module but actually a synchronous-to-synchronous (Ethernet) signal converter module 246.

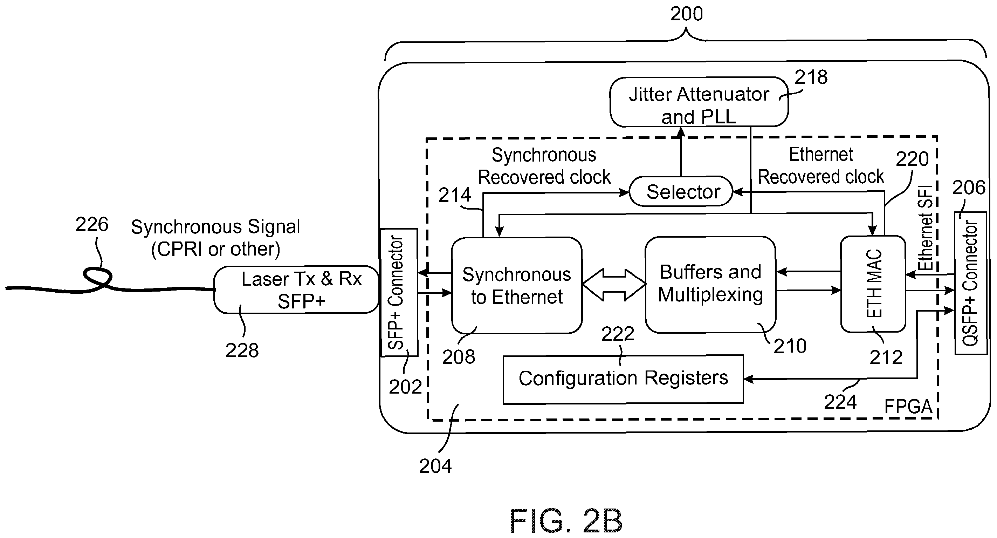

Reference is now made to FIG. 2B, which is a simplified block diagram illustration of a converter plug 200 according to an example embodiment of the disclosure.

The converter plug 200 includes:
an optional SFP connector 202 for a synchronous signal;
a synchronous-to-asynchronous signal converter module 204; and
an optional QSFP connector 206 for an asynchronous signal.

In some embodiments, the synchronous-to-asynchronous signal converter module 204 is bi-directional, converting both synchronous-to-asynchronous and asynchronous-to-synchronous in the opposite direction.

In some embodiments the converter module 204 fits into a plug which has an industry-standard SFP connector at one end, and an industry-standard QSFP connector or an industry-standard SFP connector at another end.

In some embodiments, the example converter module 204 is constructed on one PCB (Printed Circuit Board).

In some embodiments, the example converter module 204 is constructed in a FPGA (Field-Programmable Gate Array).

In some embodiments, the example converter module 204 is constructed on one PCB (Printed Circuit Board) sized no wider than 16.4 mm.

In some embodiments, the example converter module 204 includes:
a synchronous to Ethernet signal conversion unit 208;
a buffers and multiplexing unit 210;
an Ethernet MAC unit 212;
an optional signal path 214 for optionally transferring a recovered clock signal from the synchronous to Ethernet signal conversion unit 208 to a selector 216 which optionally provides the recovered clock signal from the synchronous to Ethernet signal conversion unit 208 to a jitter and/or attenuator and/or PLL unit 218;
an optional signal path 220 for optionally transferring a recovered clock signal from the Ethernet MAC unit 212 to the selector 216 which optionally provides the recovered clock signal from the Ethernet MAC unit 212 to the jitter and/or attenuator and/or PLL unit 218;

In some embodiments, the example converter module 204 optionally includes configuration registers 222.

In some embodiments, the configuration registers 222 are optionally connected 224 to the QSFP connector 206, at the Ethernet, asynchronous, end of the converter plug 200.

In some embodiments the connection 224 optionally serves to configure the converter module 204.

In some embodiments the connection 224 optionally serves to update firmware of the converter module 204.

FIG. 2B also shows a cable 226 for a synchronous signal, and a plug 228 connecting the cable 226 to the SFP connector 202.

In some embodiments the plug 228 includes an SFP interface.

In some embodiments the cable 226 is an optical signal cable, and the plug 228 is an optical signal to electric signal converter. In some embodiments the cable 226 is a fiber optic signal cable.

In some embodiments, the example converter module 204 optionally includes a power input connection for powering the converter module 204.

In some embodiments, the power used by the example converter module 204 is approximately 2 watts.

In some embodiments the converter plug 200 optionally passes through power so that an additional plug can receive power. By way of a non-limiting example, an SFP plug may optionally be plugged into the converter plug 200, and the converter plug 200 passes through power for powering the SFP plug. For example, the SFP plug optionally draws approximately 1 watt through the converter plug 200.

It is noted that a standard SFP connector potentially provides up to 5 watts of power, providing enough power through the SFP plug connector to power both the converter plug 200 and to pass through power for a standard SFP plug, or some other plug.

In some embodiments, the power used by the example converter module 204 is in a range of 1-10 watts.

In some embodiments, the example converter module 204 optionally includes a power output connection for powering the optical signal to electric signal converter in the plug 228.

In some embodiments, the example converter module 204 optionally includes an SFP connector 202 to an interface to a laser TX&RX SFP+ plug 228.

In some embodiments, the converter module's 204 board is small enough to fit into the converter plug 200.

When an FPGA, microprocessor or other configurable device is used in the converter plug 200, a software or firmware upgrade is optionally enabled via an I²C (Inter-Integrated Circuit) interface.

In some embodiments, programming of the board is optionally done via a JTAG (Joint Test Action Group) interface, optionally through dual use pins of the QSFP/SFP interface.

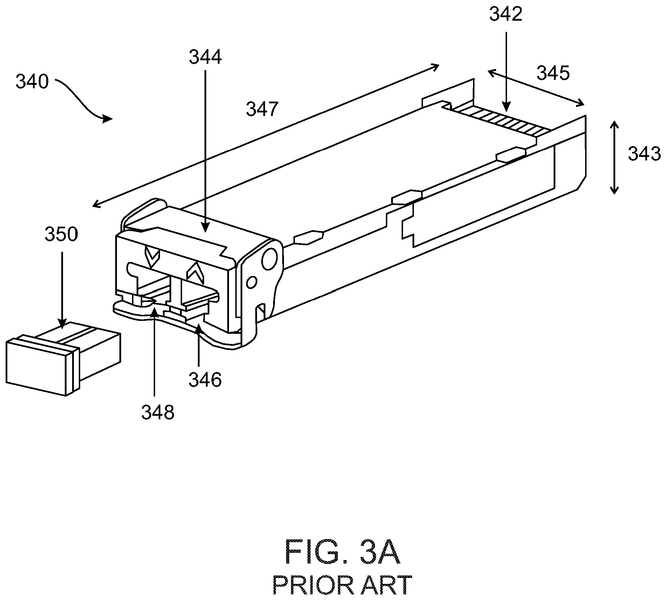

Reference is now made to FIG. 3A, which is a simplified illustration of an example SFP plug housing according to prior art.

FIG. 3A shows a prior art SFP plug housing 340. Components of the SFP plug housing 340 pointed out in FIG. 3A include:
a rear electrical connector 342;
a detach mechanism 344;
a receiver optical bore 346;
a transmitter optical bore 348; and
an optional dust plug 350.

Dimensions of the example prior art SFP connector are: height (reference 343) 8.5mm, width (reference 345) 18.4 mm, and length (reference 347) 76mm.

Example embodiments of the disclosure include a converter for converting one or more synchronous communication signals to one or more asynchronous communication signals and/or vice versa, packaged within a housing sized and shaped, for example, similarly to the example prior art housing 340 or to a SFP+ plug.

In some embodiments, the housing of an example embodiment of the disclosure includes connectors such as the electric connector and the optical connectors of the example SFP plug shown in FIG. 3A or of a SFP+ plug.

Example embodiments of the disclosure include a converter for converting one or more synchronous communication signals to one or more asynchronous communication signals and/or vice versa, packaged within a housing sized and shaped, for example, similarly to a prior art housing of a QSFP plug or a QSFP+ plug.

In some embodiments, the housing of an example embodiment of the disclosure includes connectors such as an electric connector and optical connectors of an example QSFP plug or a QSFP+ plug.

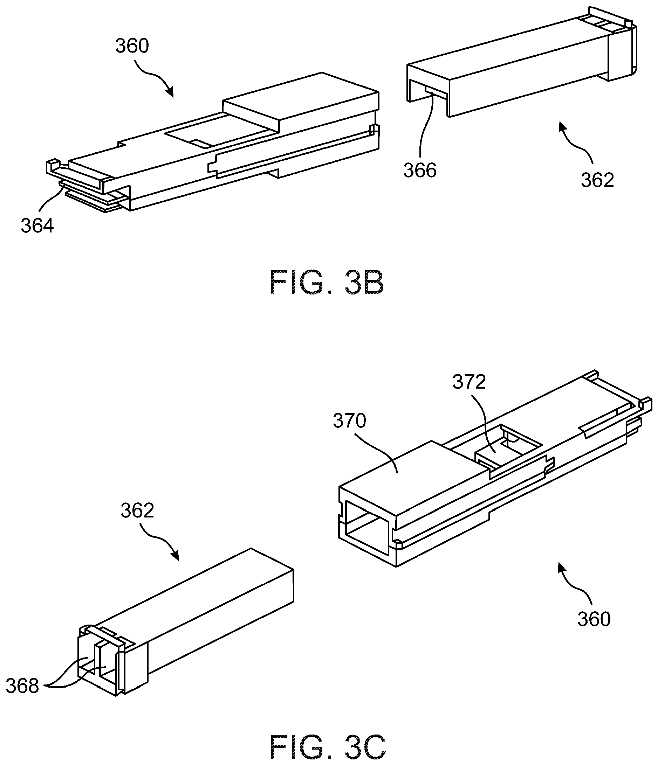

Reference is now made to FIGs. 3B and 3C, which are simplified illustrations of a converter plug 360 according to an example embodiment of the disclosure.

FIGs. 3B and 3C show a converter plug 360 next to a standard optical-to-electric SFP plug 362.

In some embodiments the converter plug 360 may optionally be plugged on one end to a communication system, by way of a non-limiting example an Ethernet radio as described herein, and on another end to a standard optical-to-electric SFP plug 362

The standard optical-to-electric SFP plug 362 has an edge connector 366 to connect to an edge connector 372 in the converter plug 360.

In some embodiments the converter plug 360 optionally includes a receptacle 370 for accepting the optical-to-electric SFP plug 362.

FIG. 3C also shows receptacles 368 for optical connectors to connect into the optical-to-electric SFP plug 362.

In some embodiments the optical-to-electric SFP plug 362 optionally receives electric power passed through the converter plug 360, optionally through the edge connectors of the converter plug 360.

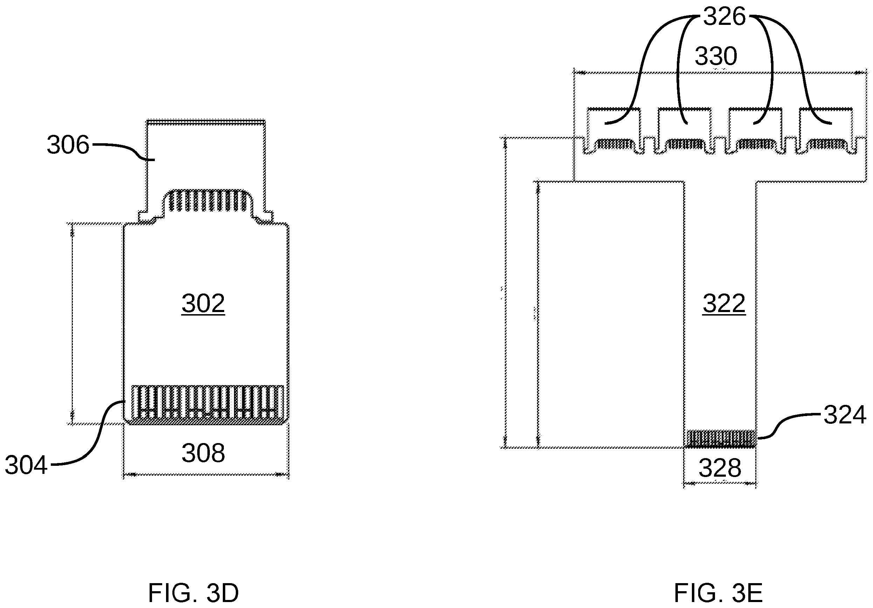

Reference is now made to FIG. 3D, which is a simplified illustration of a converter PCB (Printed Circuit Board) 302 according to an example embodiment of the disclosure.

The example converter PCB 302 is optionally a synchronous-to-asynchronous converter PCB having QSFP edge card pads 304 at one end and a SFP connector 306 at the other end.

In some embodiments, a converter module and the converter PCB 302 fits into a housing having specific internal dimensions.

For example, converter module and the converter PCB 302 fits into an SFP plug having internal dimensions of width 13.4 mm and height 8.5 mm;

For example, converter module and the converter PCB 302 fits into a QSFP plug having internal dimensions of width 18.35 mm and height 8.5 mm; and

For example, converter module and the converter PCB 302 fits into an XFP plug having internal dimensions of width 18.35 mm and height 8.5 mm.

Width of the body of the example converter PCB 302 is referenced as dimension 308.

In some embodiments, the width 308 is 12 mm. In various embodiments the width 308 may optionally be in a range of 8-18 mm.

The length of the example converter is of less concern. The converter fits into the plug, and the connectors at the ends of the plug fit into mating receptacles.

Reference is now made to FIG. 3E, which is a simplified illustration of a converter PCB 322 according to an example embodiment of the disclosure.

The example converter PCB 322 is optionally a synchronous-to-asynchronous converter PCB having QSFP edge card pads 324 at one end and four (quad) SFP connectors 326 at the other end.

Width of the body of the example converter plug 322 is referenced as dimension 328.

In various embodiments the width 328 may optionally be in a range of 11-24 mm.

In some embodiments a portion of the body of the converter PCB 322 on the quad SFP connector 326 end of the body is wider than most of the body. In such embodiments, width of the wide portion body of the example converter PCB 302 is referenced as dimension 330. In various embodiments the width 330 may optionally be in a range of 40-80 mm, for example 66 mm.

In some embodiments a portion of the body of the converter PCB 322 on the quad SFP connector 324 end of the body is wider than most of the body

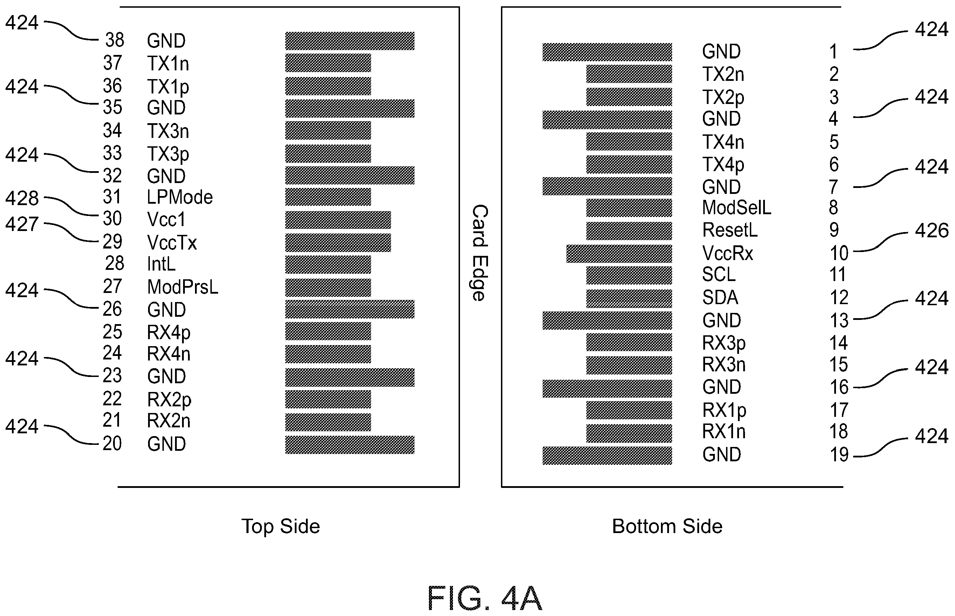

Reference is now made to FIG. 4A, which is a simplified illustration of card edge electric pads according to an example of a prior art standard.

FIG. 4A shows one example standard, the card edge electric pads according to the QSFP standard.

FIG. 4A shows 38 card edge electric pads. Some of the card edge electric pads serve for transferring signals. Some of the card edge electric pads, referenced 426 427 428, serve as power supply. Some of the card edge electric pads, referenced 424, serve as electric ground.

FIG. 4A is shown to show that a converter plug, such as the converter plug 240 of FIG. 2A, connected to a QSFP connection can draw power from, and interface with signals of, the QSFP connection.

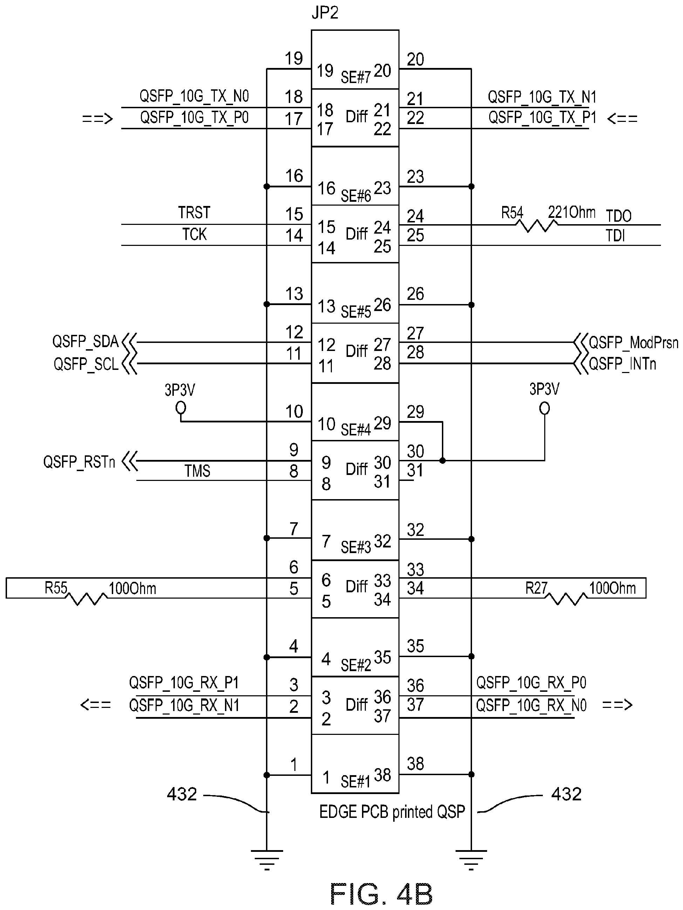

Reference is now made to FIG. 4B, which is a simplified illustration of card edge connections and some electric components for connecting to QSFP card edge electric pads according to an example embodiment of the disclosure.

FIG. 4B shows one example embodiment of electric connections and electric components in an example converter plug designed according to an example embodiment of the disclosure to connect to a QSFP edge connector.

FIG. 4B shows 38 card edge connections. Some of the card edge electric pads serve for transferring signals, some of the card edge electric pads serve as power supply, and some of the card edge electric pads serve as electric ground. Reference 432 references a ground connection connecting the ground electric pads.

FIG. 4B is shown to show that a converter plug, such as the converter plug 240 of FIG. 2A, connected to a QSFP connection can draw power from, and interface with signals of, the QSFP connection.

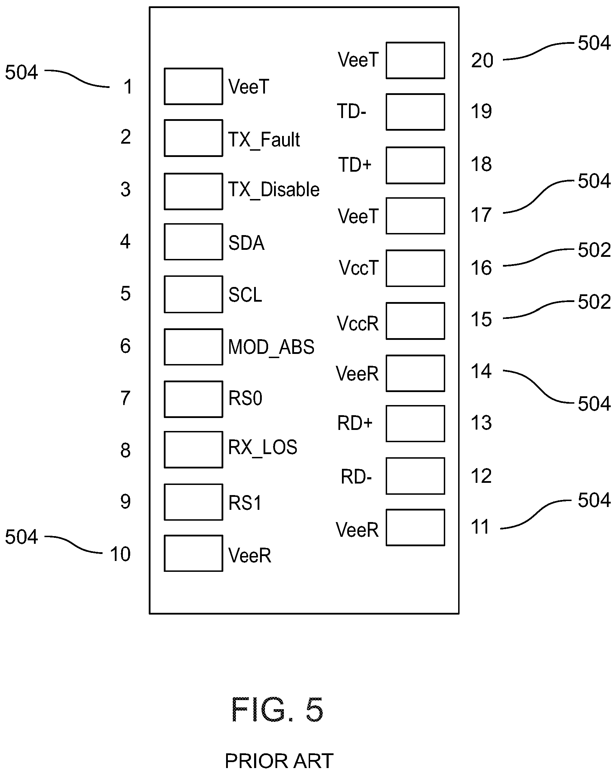

Reference is now made to FIG. 5, which is a simplified illustration of card edge electric pads according to an example of a prior art standard.

FIG. 5 shows one example standard, the card edge electric pads according to the SFP standard.

FIG. 5 shows 20 card edge electric pads. Some of the card edge electric pads serve for transferring signals. Some of the card edge electric pads, referenced 502, serve as power supply. Some of the card edge electric pads, referenced 504 (named VeeR and VeeT) serve as electric ground.

FIG. 5 is provided to show that a converter plug, such as the converter plug 240 of FIG. 2A, connected to a QSFP connection can draw power from, and interface with signals of, the QSFP connection.

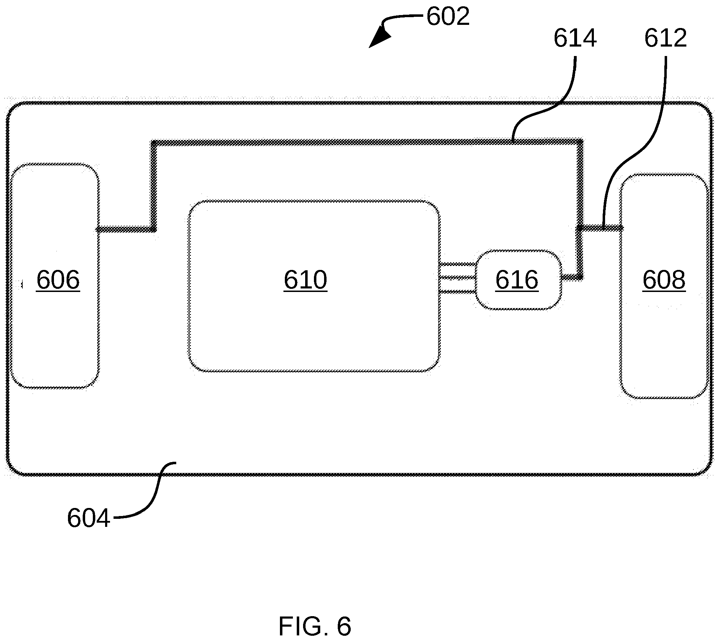

Reference is now made to FIG. 6, which is a simplified block diagram illustration of a converter plug according to an example embodiment of the disclosure.

FIG. 6 is provided to show how a converter plug, such as the converter plug 240 of FIG. 2A, connected to a QSFP connection or to an SFP connection, can draw power from, and interface with signals of, the QSFP or the SFP connection.

FIG. 6 shows a converter plug 602, having a first connector 606 at one end of the converter plug 602 and a second connector 608 at a second end of the converter plug 602. For example, the first connector 606 may optionally be a SFP connector. For example, the second connector 608 may optionally be a QSFP connector.

FIG. 6 also shows a converter module 610, for converting synchronous to Ethernet communication signals.

FIG. 6 shows an electrical conductor 612 connected to one or more power connection(s) in the second connector 608 and providing power to the converter module 610.

In some embodiments, the electrical conductor 612 optionally provides power directly to the converter module 610.

In some embodiments, the electrical conductor 612 optionally provides power to the converter module 610 through an electric power converter 616 (as shown in FIG. 6). In some embodiments, the electric power converter 616 is optionally a DC to DC power converter.

In some embodiments the converter module 610 optionally includes a pass-through electric conductor 614 which connects one or more power connection(s) in the second connector 608 to one or more power connection(s) in the first connector 606.

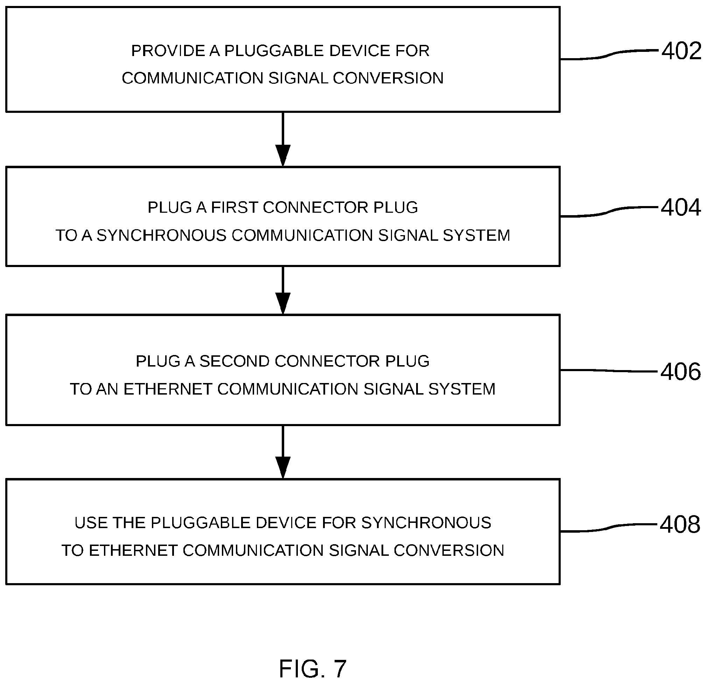

Reference is now made to FIG. 7, which is a simplified flow chart illustration of a method for connecting a synchronous communication signal system to an Ethernet signal system according to an example embodiment of the disclosure.

The method of FIG. 7 includes:
providing a pluggable device for communication signal conversion (402), the pluggable device comprising:
   a first connector plug for synchronous communication signals;
   a second connector plug for Ethernet communication signals; and
   a converter for synchronous to Ethernet communication signal conversion;
plugging the first connector plug to a synchronous communication signal system (404);
plugging the second connector plug to an Ethernet communication signal system (406); and
using the pluggable device for synchronous to Ethernet communication signal conversion (408).

It is expected that during the life of a patent maturing from this application many relevant plugs, receptacles, and connector standards for synchronous communication signals and asynchronous communication signals, will be developed and the scope of the terms used herein for plugs, receptacles and connectors is intended to include all such new technologies *a priori.*

It is expected that during the life of a patent maturing from this application many relevant SFP plugs will be developed and the scope of the terms used herein for plugs, receptacles and connectors is intended to include all such new technologies *a priori.*

It is expected that during the life of a patent maturing from this application many relevant QSFP plugs will be developed and the scope of the terms used herein for plugs, receptacles and connectors is intended to include all such new technologies *a priori.*

As used herein with reference to quantity or value, the term "about" means "within ± 20 % of".

The terms "comprising", "including", "having" and their conjugates mean "including but not limited to".

The term "consisting of" is intended to mean "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

As used herein, the singular form "a", "an" and "the" include plural references unless the context clearly dictates otherwise. For example, the term "a unit" or "at least one unit" may include a plurality of units, including combinations thereof.

The words "example" and "exemplary" are used herein to mean "serving as an example, instance or illustration". Any embodiment described as an "example or "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the disclosure may include a plurality of "optional" features unless such features conflict.

Throughout this application, various embodiments of this disclosure may be presented in a range format. It should be understood that the description in range format is merely for convenience and brevity and should not be construed as an inflexible limitation on the scope of the disclosure. Accordingly, the description of a range should be considered to have specifically disclosed all the possible sub-ranges as well as individual numerical values within that range. For example, description of a range such as from 1 to 6 should be considered to have specifically disclosed sub-ranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein (for example "10-15", "10 to 15", or any pair of numbers linked by these another such range indication), it is meant to include any number (fractional or integral) within the indicated range limits, including the range limits, unless the context clearly dictates otherwise. The phrases "range/ranging/ranges between" a first indicate number and a second indicate number and "range/ranging/ranges from" a first indicate number "to", "up to", "until" or "through" (or another such range-indicating term) a second indicate number are used herein interchangeably and are meant to include the first and second indicated numbers and all the fractional and integral numbers therebetween.

Unless otherwise indicated, numbers used herein and any number ranges based thereon are approximations within the accuracy of reasonable measurement and rounding errors as understood by persons skilled in the art.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable sub-combination or as suitable in any other described embodiment of the disclosure. Certain features described in the context of various embodiments are not to be considered essential features of those embodiments, unless the embodiment is inoperative without those elements.

Citation or identification of any reference in this application shall not be construed as an admission that such reference is available as prior art to the present disclosure. To the extent that section headings are used, they should not be construed as necessarily limiting.

## Claims

1. A plug (240) for communication signal conversion, the plug comprising:
a plug body having a width, the plug body width being not more than 24 millimeters;
an extension of said plug body having a width, the width of the extension of said plug body being in a range of 40-80 millimeters;
a first connector for synchronous communication signals (242);
a second connector for Ethernet communication signals (244); and
a converter (246) drawing power in a range of 1-10 watts for synchronous to Ethernet communication signal conversion, connected at a first end to the first connector and at a second end to the second connector,
wherein:
the first connector, the second connector and the converter are comprised within a plug housing; and
the plug housing is sized and shaped to fit within a Quad Small Form-factor Pluggable (QSFP) connector receptacle for communications signals.

2. The plug of claim 1, wherein the converter (246) draws power in a range of less than 2 watts.

3. The plug of claim 1, wherein:
the plug comprises multiple communication signal ports;
the plug is arranged for performing synchronous/asynchronous communication signal conversion for at least one of the multiple communication signal ports, and to pass through synchronous/asynchronous communication signal for at least one of the multiple communication signal ports.

4. The plug of claim 3, wherein the plug is arranged for performing synchronous/asynchronous communication signal conversion for at least one of the multiple communication signal ports, and to pass through an Ethernet communication signal for at least one of the multiple communication signal ports.

5. The plug of claim 1, wherein the converter is arranged to receive a firmware upgrade selected from a group consisting of: through at least one of the first connector and the second connector; through an I²C (Inter-Integrated Circuit) interface; through an SFP connector; and through a QSFP connector.

6. The plug of claim 1, wherein the converter is arranged to receive JTAG (Joint Test Action Group) programming selected from a group consisting of: through one of the connectors: through an SFP connector; and through a QSFP connector.

7. The plug of claim 1, wherein the converter is arranged to receive electric power through an electric conductor external to the first connector and the second connector.

8. A method for connecting a synchronous communication signal system to an Ethernet signal system, the method including:
providing a plug (240) for communication signal conversion, the plug comprising:
a first connector (242) for synchronous communication signals;
a second connector (244) for Ethernet communication signals; and
a converter (246) for synchronous to Ethernet communication signal conversion, connected at a first end to the first connector and at a second end to the second connector; wherein the first connector, the second connector and the converter are comprised within a plug housing; and the plug housing is sized and shaped to fit within for plugging into a Quad Small Form-factor Pluggable (QSFP) connector receptacle for communications signals, the plug housing defining:
a plug body having a width, the plug body width being not more than 24 millimeters;
an extension of said plug body having a width, the width of the extension of said plug body being in a range of 40-80 millimeters;
drawing power for the plug in a range of 1-10 watts;
plugging the first connector to a synchronous communication signal system;
plugging the second connector to an Ethernet communication signal system; and
using the plug for synchronous to Ethernet communication signal conversion.

9. The method of claim 8, comprising the plug drawing power in a range of less than 2 watts.

10. The method of claim 8, wherein the Ethernet communication signal comprises a synchronous Ethernet signal.

11. The method of claim 8, wherein using the plug for communication signal conversion comprises using the converter to convert a CPRI (Common Public Radio Interface) signal to a synchronous Ethernet signal.

12. The method of claim 11, wherein using the plug for communication signal conversion comprises converting signals from a QSFP connector to an Ethernet signal.

13. The method of claim 11, further comprising extracting a clock signal from a synchronous communication signals.

14. The method of claim 11,further comprising the converter receiving JTAG (Joint Test Action Group) programming through one of the connectors.

15. The method of claim 11 and further comprising the converter receiving electric power through an electric conductor external to the first connector and the second connector.

## Patentansprüche

1. Stecker (240) zur Umwandlung von Kommunikationssignalen, wobei der Stecker umfasst:
einen Stopfenkörper mit einer Breite, die nicht mehr als 24 Millimeter beträgt;
eine Verlängerung des Steckerkörpers mit einer Breite, wobei die Breite der Verlängerung des Steckerkörpers im Bereich von 40-80 Millimetern liegt;
einen ersten Anschluss für synchrone Kommunikationssignale (242);
einen zweiten Anschluss für Ethernet-Kommunikationssignale (244); und
einen Wandler (246), der Leistung in einem Bereich von 1-10 Watt für die Umwandlung von Synchron- in Ethernet-Kommunikationssignale aufnimmt und an einem ersten Ende mit dem ersten Verbinder und an einem zweiten Ende mit dem zweiten Verbinder verbunden ist,
wobei:
der erste Verbinder, der zweite Verbinder und der Konverter in einem Steckergehäuse untergebracht sind; und
Das Steckergehäuse ist so dimensioniert und geformt, dass es in eine Quad Small Form-factor Pluggable (QSFP)-Steckverbinderbuchse für Kommunikationssignale passt.

2. Stecker nach Anspruch 1, wobei der Wandler (246) eine Leistung im Bereich von weniger als 2 Watt aufnimmt.

3. Stecker nach Anspruch 1, wobei:
der Stecker umfasst mehrere Anschlüsse für Kommunikationssignale;
der Stecker so angeordnet ist, dass er eine synchrone/asynchrone Kommunikationssignalumwandlung für mindestens einen der mehreren Kommunikationssignalanschlüsse durchführt und das synchrone/asynchrone Kommunikationssignal für mindestens einen der mehreren Kommunikationssignalanschlüsse durchlässt.

4. Stecker nach Anspruch 3, wobei der Stecker so angeordnet ist, dass er eine synchrone/asynchrone Kommunikationssignalumwandlung für mindestens einen der mehreren Kommunikationssignalanschlüsse durchführt und ein Ethernet-Kommunikationssignal für mindestens einen der mehreren Kommunikationssignalanschlüsse durchleitet.

5. Stecker nach Anspruch 1, wobei der Konverter so angeordnet ist, dass er eine Firmware-Aktualisierung empfängt, die aus einer Gruppe ausgewählt ist, die besteht aus: durch mindestens einen von dem ersten Anschluss und dem zweiten Anschluss; durch eine I²C-Schnittstelle (Inter-Integrated Circuit); durch einen SFP-Anschluss; und durch einen QSFP-Anschluss.

6. Stecker nach Anspruch 1, wobei der Konverter so angeordnet ist, dass er die JTAG-Programmierung (Joint Test Action Group) empfängt, die aus einer Gruppe ausgewählt wird, die besteht aus: durch einen der Anschlüsse; durch einen SFP-Anschluss; und durch einen QSFP-Anschluss.

7. Stecker nach Anspruch 1, wobei der Konverter so angeordnet ist, dass er elektrischen Strom über einen elektrischen Leiter außerhalb des ersten Steckers und des zweiten Steckers empfängt.

8. Verfahren zum Verbinden eines synchronen Kommunikationssignalsystems mit einem Ethernet-Signalsystem, wobei das Verfahren Folgendes umfasst: Bereitstellung eines Steckers (240) zur Umwandlung von Kommunikationssignalen, wobei der Stecker Folgendes umfasst:
einen ersten Anschluss (242) für synchrone Kommunikationssignale;
einen zweiten Anschluss (244) für Ethernet-Kommunikationssignale; und
einen Konverter (246) zur Synchron-zu-Ethernet-Kommunikationssignalumwandlung, der an einem ersten Ende mit dem ersten Verbinder und an einem zweiten Ende mit dem zweiten Verbinder verbunden ist; wobei der erste Verbinder, der zweite Verbinder und der Konverter in einem Steckergehäuse enthalten sind und das Steckergehäuse so bemessen und geformt ist, dass es zum Einstecken in eine Quad Small Form-Factor Pluggable (QSFP)-Verbindungsbuchse für Kommunikationssignale hineinpasst, wobei das Steckergehäuse definiert ist:
einen Stopfenkörper mit einer Breite, die nicht mehr als 24 Millimeter beträgt;
eine Verlängerung des Steckerkörpers mit einer Breite, wobei die Breite der Verlängerung des Steckerkörpers im Bereich von 40-80 Millimetern liegt;
Leistungsaufnahme des Steckers in einem Bereich von 1-10 Watt;
Anschluss des ersten Steckers an ein synchrones Kommunikationssignalsystem;
Anschließen des zweiten Steckers an ein Ethernet-Kommunikationssignalsystem; und
Verwendung des Steckers für die Umwandlung von Synchron- in Ethernet-Kommunikationssignale.

9. Verfahren nach Anspruch 8, wobei der Stecker eine Leistung im Bereich von weniger als 2 Watt aufnimmt.

10. Verfahren nach Anspruch 8, wobei das Ethernet-Kommunikationssignal ein synchrones Ethernet-Signal umfasst.

11. Verfahren nach Anspruch 8, wobei die Verwendung des Steckers zur Umwandlung von Kommunikationssignalen die Verwendung des Konverters zur Umwandlung eines CPRI-Signals (Common Public Radio Interface) in ein synchrones Ethernet-Signal umfasst.

12. Verfahren nach Anspruch 11, wobei die Verwendung des Steckers zur Umwandlung von Kommunikationssignalen die Umwandlung von Signalen von einem QSFP-Anschluss in ein Ethernet-Signal umfasst.

13. Das Verfahren nach Anspruch 11 umfasst ferner die Extraktion eines Taktsignals aus einem synchronen Kommunikationssignal.

14. Verfahren nach Anspruch 11, bei dem der Konverter über einen der Anschlüsse eine JTAG-Programmierung (Joint Test Action Group) empfängt.

15. Verfahren nach Anspruch 11, bei dem der Wandler über einen elektrischen Leiter außerhalb des ersten Verbinders und des zweiten Verbinders elektrische Energie erhält.

## Revendications

1. Fiche (240) pour la conversion des signaux de communication, la fiche comprenant:
un corps de fiche ayant une largeur, la largeur du corps de fiche n'étant pas supérieure à 24 millimètres;
une extension dudit corps de fiche ayant une largeur, la largeur de l'extension dudit corps de fiche est comprise entre 40-80 millimètres;
un premier connecteur pour les signaux de communication synchrones (242);
un deuxième connecteur pour les signaux de communication Ethernet (244); et
un convertisseur (246) consommant une puissance comprise entre 1-10 watts pour la conversion du signal de communication synchrone en signal Ethernet, connecté à une première extrémité au premier connecteur et à une seconde extrémité au second connecteur,
dans laquelle:
le premier connecteur, le second connecteur et le convertisseur se trouvent à l'intérieur d'un boîtier de fiche; et
le boîtier de fiche est dimensionné et formé pour s'adapter à un réceptacle de connecteur Quad Small Form Factor Pluggable (QSFP) pour les signaux de communication.

2. Fiche de la revendication 1, dans laquelle le convertisseur (246) consomme moins de 2 watts.

3. Fiche de la revendication 1, dans laquelle:
la fiche comprend plusieurs ports de signaux de communication;
la fiche est agencée pour effectuer la conversion du signal de communication synchrone/asynchrone pour au moins un des multiples ports de signal de communication, et pour faire passer le signal de communication synchrone/asynchrone pour au moins un des multiples ports de signal de communication.

4. Fiche de la revendication 3, dans lequel la fiche est agencée pour effectuer une conversion de signal de communication synchrone/asynchrone pour au moins un des multiples ports de signal de communication, et pour faire passer un signal de communication Ethernet pour au moins un des multiples ports de signal de communication.

5. Fiche de la revendication 1, dans laquelle le convertisseur est conçu pour recevoir une mise à jour du micrologiciel choisie dans un groupe constitué de:
à travers au moins un du premier connecteur et du second connecteur; à travers une interface I²C (circuit intégré); à travers un connecteur SFP; et à travers un connecteur QSFP.

6. Fiche de la revendication 1, dans laquelle le convertisseur est conçu pour recevoir une programmation JTAG (Joint Test Action Group) choisie dans un groupe constitué de: à travers l'un des connecteurs: à travers un connecteur SFP; et à travers un connecteur QSFP.

7. Fiche de la revendication 1, dans laquelle le convertisseur est conçu pour recevoir de l'énergie électrique par l'intermédiaire d'un conducteur électrique externe au premier connecteur et au second connecteur.

8. Méthode de connexion d'un système de signaux de communication synchrone à un système de signaux Ethernet:
fournir une fiche (240) pour la conversion des signaux de communication, la fiche comprenant:
un premier connecteur (242) pour les signaux de communication synchrones;
un deuxième connecteur (244) pour les signaux de communication Ethernet; et
un convertisseur (246) pour la conversion du signal de communication synchrone en signal Ethernet, connecté à une première extrémité au premier connecteur et à une seconde extrémité au second connecteur; dans lequel le premier connecteur, le second connecteur et le convertisseur sont compris dans un boîtier de fiche, et le boîtier de fiche est dimensionné et formé pour s'adapter à l'intérieur d'un réceptacle de connecteur Quad Small Form-Factor Pluggable (QSFP) pour les signaux de communication, le boîtier de fiche définissant:
un corps de fiche ayant une largeur, la largeur du corps de fiche n'étant pas supérieure à 24 millimètres;
une extension dudit corps de fiche ayant une largeur, la largeur de l'extension dudit corps de fiche est comprise entre 40-80 millimètres;
le prélèvement d'énergie pour la fiche dans une fourchette de 1-10 watts;
brancher le premier connecteur sur un système de signaux de communication synchrone;
brancher le second connecteur sur un système de signaux de communication Ethernet; et
en utilisant la fiche pour la conversion du signal de communication synchrone en signal de communication Ethernet.

9. Méthode de la revendication 8, comprenant la fiche qui tire de l'énergie dans une gamme de moins de 2 watts.

10. Méthode de la revendication 8, dans laquelle le signal de communication Ethernet comprend un signal Ethernet synchrone.

11. Méthode de la revendication 8, dans laquelle l'utilisation de la fiche pour la conversion des signaux de communication comprend l'utilisation du convertisseur pour convertir un signal CPRI (Common Public Radio Interface) en un signal Ethernet synchrone.

12. Méthode de la revendication 11, dans laquelle l'utilisation de la fiche pour la conversion des signaux de communication comprend la conversion des signaux d'un connecteur QSFP en un signal Ethernet.

13. Méthode de la revendication 11, comprenant en outre l'extraction d'un signal d'horloge à partir d'un signal de communication synchrone.

14. Méthode de la revendication 11 comprend en outre la réception par le convertisseur de la programmation JTAG (Joint Test Action Group) par l'intermédiaire de l'un des connecteurs.

15. Méthode de la revendication 11 comprend en outre la réception par le convertisseur d'énergie électrique par l'intermédiaire d'un conducteur électrique extérieur au premier connecteur et au second connecteur.
